(19) Europäisches Patentamt
European Patent Office
Office européen des brevets

(11) EP 0 630 871 B1

(12) **EUROPÄISCHE PATENTSCHRIFT**

(45) Veröffentlichungstag und Bekanntmachung des Hinweises auf die Patenterteilung: **28.10.1998 Patentblatt 1998/44**

(21) Anmeldenummer: **94109159.7**

(22) Anmeldetag: **15.06.1994**

(51) Int. Cl.[6]: **C04B 28/02**, C04B 24/38, C09D 7/12
// (C04B28/02, 24:32, 24:38), (C04B28/02, 24:16, 24:38), (C04B28/02, 24:12, 24:38), (C04B28/02, 24:04, 24:38)

(54) **Verdickerkombinationen für Baustoffprodukte**

Thickener combinations for building products

Combinaisons d'agents épaississants pour produits de construction

(84) Benannte Vertragsstaaten:
**AT BE CH DE DK ES FR GB IT LI NL**

(30) Priorität: **21.06.1993 DE 4320508**

(43) Veröffentlichungstag der Anmeldung:
**28.12.1994 Patentblatt 1994/52**

(73) Patentinhaber: **Clariant GmbH**
**65929 Frankfurt am Main (DE)**

(72) Erfinder:
- **Schermann, Walter, Dr.**
  **D-55128 Mainz (DE)**
- **Miller, Dennis, Dr.**
  **D-65779 Kelkheim (DE)**
- **Hilgenfeldt, Eckhard**
  **D-65201 Wiesbaden (DE)**
- **Böhme-Kovac, Jozef**
  **D-55278 Dexheim (DE)**

(56) Entgegenhaltungen:
**EP-A- 0 314 118**
**EP-A- 0 390 240**
**EP-A- 0 504 870**
**WO-A-92/03120**
**DE-A- 3 920 025**

- **CHEMICAL ABSTRACTS, vol. 88, no. 26, 26. Juni 1978, Columbus, Ohio, US; abstract no. 196432b, N. TANAKA ET AL. Seite 328 ; & JP-A-52 102 366 (ID.)**
- **CHEMICAL ABSTRACTS, vol. 107, no. 18, 2. November 1987, Columbus, Ohio, US; abstract no. 160386m, M. TANAKA ET AL. Seite 393 ; & JP-A-6 236 055 (ID.)**
- **DATABASE WPI Week 7937, Derwent Publications Ltd., London, GB; AN 79-67105B & JP-A-54 099 135 (DAINIPPON TORYO KK)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 630 871 B1

Printed by Xerox (UK) Business Services
2.16.3/3.4

**Beschreibung**

Bekannt sind synergistische Verdickungseffekte von Mischungen aus wasserlöslichen ionogenen und nicht-ionogenen Polymeren, z.B. Hydroxyethyl- und Natrium-Carboxymethylcellulosen. Die Verdickungswirkung hängt vom Molekulargewicht des Celluloseethers, Art des Substituenten, dem jeweiligen Substitutionsgrad sowie der eingesetzten Menge ab.

Ebenfalls bekannt ist, daß durch entsprechende Modifizierung eines Celluloseethers Makrotenside mit verändertem rheologischen Verhalten hergestellt werden können (Nonionic Polymer Surfactants, L.M. Landoll, Journal of Polymer Science: Polymer Chemistry Edition, Vol. 20, 443-455 (1982), John Wiley & Sons, Inc. N.Y.).

Ferner wird eine Wechselwirkung zwischen Na-Dodecylsulfat (SDS) und Ethylhydroxyethylcellulose (EHEC) (I. Nahringbauer, Progr. Colloid Poly. Sci. 84, 200-205 (1991)) respektive Methylhydroxyethylcellulose (J.-E- Löfroth, L. Johansson, A.-C. Normann und K. Wettström, Prog. Colloid Poly. Sci. 84, 73-77 (1992)) beschrieben.

Es ist weiter bekannt, daß partiell hydrophobierte Celluloseether mit herkömmlichen Tensiden von niedrigerem Molekulargewicht in Wechselwirkung treten können. Sie führen entweder zu einer Zu- oder Abnahme der Viskosität. Im einzelnen werden Wechselwirkungen von partiell hydrophobierter Hydroxyethylcellulose (HM-HEC) mit Tensiden in der Literatur veröffentlicht:

- Zunahme der Viskosität bei Zusatz von anionischem Na-Oleat (R.A. Gelman and H.-G. Barth, Polymer. Mater. Sci., Eng. 51, 556-560, 1987)
- Abnahme der Viskosität bei Zusatz von nicht-ionischem Oktylphenoloxethylat mit 67 % EO (R.A. Gelman, Int. Dissolving Pulps Conf., Genf 1987)
- Zunahme der Viskosität bei Zusatz von anionischem Na-Dodecylsulfat (SDS).

Der Einfluß von SDS ist anders als der von Gelman mit Na-Oleat gefundene Effekt. Mit SDS erreicht der Effekt bei der kritischen Mizellbildungskonzentration des Tensides sein Maximum. Bei höheren Konzentrationen wird er zunehmend schwächer. Mit nicht-modifizierter Hydroxyethylcellulose (HEC) hat Na-Dodecylsulfat (SDS) keine Wechselwirkung (R. Tanaka, J. Meadows, G.O. Phillips und P.A. Williams, Carbohydrate Polymers, 12, 443-459 (1990)).

Ferner werden Wechselwirkungen von partiell hydrophobierter Hydroxyethylcellulose (HM-HEC) mit anionischen Tensiden, wie Na-Hexanoat, Na-Oktanoat, Na-Decanoat, Na-Dodecanoate, Na-Decylsulfat und mit nicht-ionischen Tensiden vom Typ Alkylpoly(oxyethylen)-Ether mit $C_{11}$,$C_{13}$-Kettenlänge und 8EO-Einheiten beschrieben (R. Tanaka, J. Meadows, P.A. Williams und G.O. Phillips, Macromolecules 1992, 25, 1304-1310). Ebenso ist diese neue Klasse der nicht-ionogenen "hydrophob modifizierten" wasserlöslichen Cellulosederivate mit niedrigem Hydrophobierungsgrad in wissenschaftliches Interesse bzgl. qualitativer Modellvorstellungen über das Wirkungsprinzip gerückt (E.D. Goddard, J. Coll. Int. Sci., Vol. 152, No. 2 (1992), 578-581).

Ebenso spiegelt die zahlreiche Patentliteratur die Aktivitäten auf dem Sektor der partiell hydrophobierten Cellulosederivate (DE-A-3 004 161, EP-A-0 426 086, EP-A-0 384 167, EP-A-390 240) wieder.

Es besteht der Wunsch nach einer kostengünstigen und einfachen Methode, durch Verdickerkombinationen erzielbare Verbesserungen, z.B. in der Verarbeitungsrheologie von Baustoffen, wirkungsvoll einzusetzen und dadurch das herkömmliche Eigenschaftsprofil der ursprünglichen Basisverdicker, d.h. der nicht-modifizierten Cellulosederivate zu erweitern.

Pauschal sind die Wechselwirkungen von partiell hydrophobierter Hydroxyethylcellulose (HM-HEC) mit Tensiden bekannt, wobei es, wie zuvor beschrieben, zu einer Zunahme oder zu einer Abnahme der Viskosität kommen kann. Die Art des rheologischen Effektes hängt u.a. von der Konzentration und der chemischen Struktur des zugesetzten Tensides ab. Unter anderem sind noch Einflußparameter des Baustoffproduktes zu berücksichtigen. Diese Einflüsse können nicht theoretisch vorhergesagt werden.

Überraschend wurde nun gefunden, daß mit Verdickerkombinationen aus wasserlöslichen, nichtionischen Celluloseethern und ausgewählten Tensiden oder Naphthalinsulfonsäure-Kondensaten anwendungsrelevante Verbesserungen in den Verarbeitungseigenschaften von Baustoffprodukten erzielt werden können.

Die Aufgabe bestand in der Zurverfügungstellung einer kostengünstigen Verdickermischung, die bei möglichst geringem Anteil an Emulgator akzeptable Verdickereigenschaften aufweist.

Gegenstand der Erfindung sind Verdickerkombinationen für Baustoffprodukte enthaltend mindestens einen in Wasser bzw. wäßrigen Tensidlösungen löslichen, nichtionischen Celluloseether (Komponente I), der mit mindestens einem Kohlenwasserstoffrest mit 8 bis 36 Kohlenstoffatomen substituiert ist, und als Komponente II 0,05 bis 10 Gew.-%, bezogen auf das Gesamtgewicht der Komponenten I und II,

a) mindestens ein nichtionisches Tensid der Formel

$$R - A_n - OH$$

worin

R gleich $C_8$-$C_{22}$-Alkyl, bevorzugt $C_{11}$-$C_{18}$-Alkyl, $C_8$-$C_{22}$-Alkenyl, bevorzugt $C_{11}$-$C_{22}$-Alkenyl oder $C_8$-$C_{12}$-Alkaryl ist,
A die Gruppe $OCH_2CH_2$ oder $OCH(CH_3)CH_2$ bedeutet und
n eine Zahl von 1 bis 8, bevorzugt 2 bis 5, darstellt

oder
b) mindestens ein anionisches Tensid, bestehend aus:
$b_1$) mindestens einem Ethersulfat, Ethersulfonat, Ethercarboxylat und/oder Isethionat der Formel

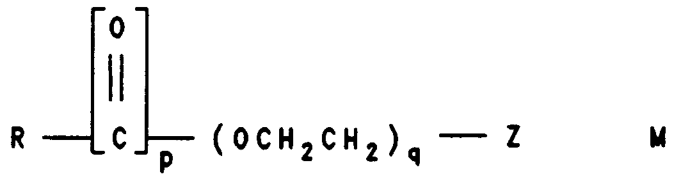

worin

R gleich $C_8$-$C_{22}$-Alkyl, bevorzugt $C_{11}$-$C_{18}$-Alkyl oder $C_8$-$C_{22}$-Alkenyl, bevorzugt $C_{11}$-$C_{22}$-Alkenyl oder $C_8$-$C_{12}$-Alkaryl,
Z eine Gruppe der Formel $OSO_3^{\ominus}$, $SO_3^{\ominus}$ oder $OCO_2^{\ominus}$,
M ein Alkalimetallion oder Triethanolammoniumion,
p entweder 0 oder 1 und
q eine Zahl von 1 bis 5, bevorzugt 2 bis 3 bedeuten,

oder
$b_2$) mindestens einem Olefinsulfonat Na-Salz, einem primären oder sekundären Alkansulfonat oder einem primären oder sekundären Alkyl-Arylsulfonat,
oder
$b_3$) mindestens einem Taurid und/oder Methyltaurid der Formel

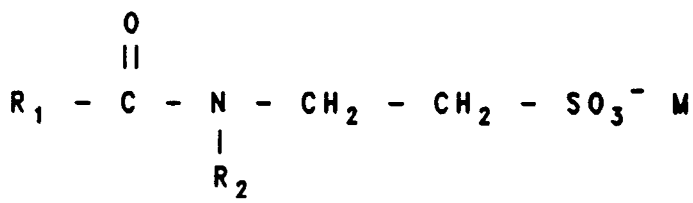

worin

$R_1$ gleich $C_8$-$C_{18}$-Alkyl, bevorzugt $C_{11}$-$C_{18}$-Alkyl oder $C_8$-$C_{18}$-Alkenyl, bevorzugt $C_{11}$-$C_{18}$-Alkenyl,
$R_2$ gleich Wasserstoff oder Methyl und
M ein Alkalimetallion oder Triethanolammoniumion bedeuten

oder
c) mindestens ein kationisches Tensid der Formel

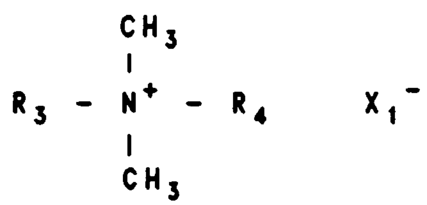

worin

$R_3$ gleich $C_8$-$C_{20}$-Alkyl
$R_4$ gleich Wasserstoff, Methyl, Benzyl oder $C_8$-$C_{20}$-Alkyl
$X_1^-$ = Halogenion, Acetation, Lactation oder Methylsulfation bedeuten

oder
d) mindestens ein Naphthalinsulfonsäure-Formaldehyd-Kondensat.

Die als Komponente I eingesetzten Celluloseether sind üblicherweise nichtionische, mindestens zu 1 Gew.-% in Wasser bzw. wäßrigen Tensidlösungen bei 20°C lösliche Celluloseether.
Derartige Celluloseether besitzen bevorzugt eine Methyl-, Hydroxyethyl-, Hydroxypropyl- oder Ethylhydroxyethylsubstitution, besonders bevorzugt eine Hydroxyethyl- oder Ethylhydroxyethylsubstitution (= Celluloseethersubstrat) und eine weitere Substitution durch mindestens einen Kohlenwasserstoffrest mit 8 bis 36, bevorzugt 10 bis 24 Kohlenstoffatomen, in einer Menge zwischen 0,2 Gew.-% und 5 Gew.-%, bezogen auf das Celluloseethersubstrat.
Die als Komponente I eingesetzten Celluloseether besitzen bevorzugt ein mittleres Molekulargewicht ($\overline{M}_w$) von 10 000 bis 500 000.
Jeder nichtionische, wasserlösliche Methyl-, Hydroxyethyl-, Hydroxypropyl-oder Ethylhydroxyethylcelluloseether kann als Celluloseethersubstrat zur Bildung der erfindungsgemäß verwendeten Celluloseether eingesetzt werden. So können z.B. Methylcellulose, Hydroxyethylcellulose, Hydroxypropylcellulose, Ethylhydroxyethylcellulose, Methylhydroxyethylcellulose und Methylhydroxypropylcellulose modifiziert werden. Die Menge an den vorgenannten Substituenten scheint unkritisch zu sein, solange genügend vorhanden ist, um sicherzustellen, daß der Celluloseether in Wasser bzw. wäßrigen Tensidlösungen löslich ist.

Das bevorzugte Celluloseethersubstrat ist Hydroxyethylcellulose (HEC) oder Ethylhydroxyethylcellulose (EHEC). Die zuvor genannten Celluloseethersubstrate sind mit einem oder mehreren Kohlenwasserstoffradikalen mit 8 bis 36 Kohlenstoffatomen, bevorzugt 10 bis 24 Kohlenstoffatomen substituiert. Diese partielle Hydrophobierung erfolgt nur in dem Ausmaß, daß die Löslichkeit der erfindungsgemäß eingesetzten Celluloseether in Wasser bzw. wäßrigen Tensidlösungen weiterhin gegeben ist. Üblicherweise werden die hydrophoben Substituenten in einer Menge zwischen 0,2 Gew.-% und 5 Gew.-%, bezogen auf das Celluloseethersubstrat, eingesetzt. Zur partiellen Hydrophobierung eignen sich verschiedene Reagenzien.
Hierzu zählen sowohl $C_8$-$C_{36}$-Alkylhalogenide, $C_8$-$C_{36}$-Alkylarylhalogenide, $C_8$-$C_{36}$-Alkylepoxide, $C_8$-$C_{36}$-Alkylarylglycidylether als auch $C_8$-$C_{36}$-Alkylglycidylether.

Bei den Alkylepoxiden werden bevorzugt Verbindungen mit einer Kettenlänge von 10 bis 24 Kohlenstoffatomen, besonders bevorzugt Verbindungen mit folgender Kohlenstoffkettenlänge eingesetzt: $C_{10}$, $C_{12}$, $C_{14}$ und $C_{20}$-$C_{24}$. Zu den mit Alkylepoxiden partiell hydrophobierten Celluloseethern zählen insbesondere die entsprechenden Hydroxyethylcelluloseether (HEC), wie sie in DE-A-30 04 161 beschrieben sind.

Die verwendeten Alkylarylglycidylether lassen sich durch folgende Formel darstellen:

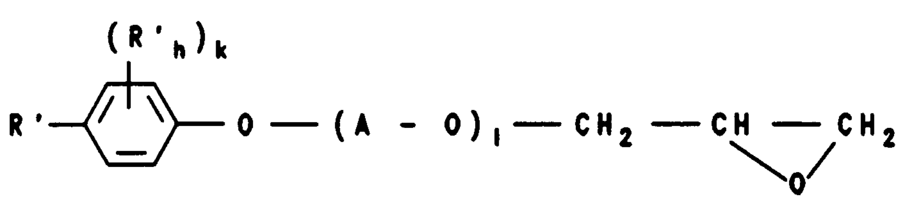

worin

R' und $R'_h$ unabhängig voneinander Kohlenwasserstoffreste mit 2 bis 25 Kohlenstoffatome sind, mit der Maßgabe, daß die Gesamtzahl der Kohlenstoffatome in dem Glycidylether zwischen 8 und 36, bevorzugt zwischen 10 und 24 liegt,
k Null oder Eins ist,
A eine Gruppe der Formel $CH_2CH_2$ oder $CH(CH_3)CH_2$ ist und
l eine Zahl von null bis 6, bevorzugt 1 bis 4 bedeutet.

Zu den mit Alkylarylglycidylethern partiell hydrophobierten Celluloseethern zählen insbesondere Hydroxyethylcelluloseether (HEC) und Ethylhydroxyethylcelluloseether (EHEC), wie sie in EP-A-0 384 167, EP-A-0 390 240 und EP-A-0 426 086 beschrieben sind. Von den dort beschriebenen Alkylarylglycidylether werden bevorzugt $C_{10}$-$C_{24}$-Alkylarylglycidylether, besonders bevorzugt Nonylphenylglycidylether, Dinonylphenylglycidylether, Dodecylphenylglycidylether sowie deren entsprechenden ethoxylierten oder propoxylierten Verbindungen eingesetzt.

Bei den partiell hydrophobierten Hydroxyethylcelluloseethern (HEC) sind die molaren Substitutionsgrade MS(EO) bevorzugt von 1,5 bis 3,3 und die durchschnittlichen Substitutionsgraden DS(EO) bevorzugt von 0,8 bis 2,2. Bei den partiell hydrophobierten Ethylhydroxyethylcelluloseethern (EHEC) sind die molaren Substitutionsgrade DS(Ethyl) bevorzugt von 0,5 bis 1,5, die molaren Substitutionsgrade MS(EO) bevorzugt von 0,5 bis 2,8 und die durchschnittlichen Substitutionsgrade DS(EO) bevorzugt von 0,5 bis 2,0.

Verfahren zur Herstellung der erfindungsgemäß verwendeten Celluloseether sind dem Fachmann bekannt. Die erfindungsgemäß verwendeten Celluloseether können nach praktisch den gleichen Methoden hergestellt werden. Die bevorzugte Arbeitsweise zur Herstellung dieser Celluloseether umfasst das Aufschlämmen des Celluloseethersubstrats in einem inerten organischen Verdünnungsmittel, z.B. einem niederen aliphatischen Alkohol, Keton oder Kohlenwasserstoff und den Zusatz einer Lösung eines Alkalimetallhydroxids zu der erhaltenen Aufschlämmung bei Raumtemperatur. Wenn das Celluloseethersubstrat gründlich benetzt und durch das Alkali gequollen ist, erfolgt die partielle Hydrophobierung durch Zugabe des Kohlenwasserstoffradikals in Form eines Halogenids, Epoxids oder Glycidylethers und die Reaktion wird bis zum Ende fortgesetzt. Restliches Alkali wird dann neutralisiert und das Produkt gewonnen, mit inerten Verdünnungsmitteln gewaschen und getrocknet.

Als Komponente II werden nichtionische Tenside (Komponente IIa), anionische Tenside (Komponente IIb), kationische Tenside (Komponente IIc) oder Naphthalinsulfonsäure-Formaldehyd-Kondensate (Komponente IId) eingesetzt.

Die nichtionischen Tenside besitzen die Formel

$$R - A_n - OH$$

worin

R gleich $C_8$-$C_{22}$-Alkyl, bevorzugt $C_{11}$-$C_{18}$-Alkyl, $C_8$-$C_{22}$-Alkenyl, bevorzugt $C_{11}$-$C_{22}$-Alkenyl oder $C_8$-$C_{12}$-Alkaryl ist,
A die Gruppe $OCH_2CH_2$ oder $OCH(CH_3)CH_2$ bedeutet und
n eine Zahl von 1 bis 8, bevorzugt 2 bis 5, darstellt.

Beispielhaft für derartige Tenside seien die Komponenten II 1 bis II 5 aus der Gruppe a genannt, welche nachstehend auf Seite 15 aufgeführt sind.

Die entsprechend Komponente IIb eingesetzten anionischen Tenside bestehen aus:

$b_1$) einem Ethersulfat, Ethersulfonat, Ethercarboxylat und/oder Isethionat der Formel

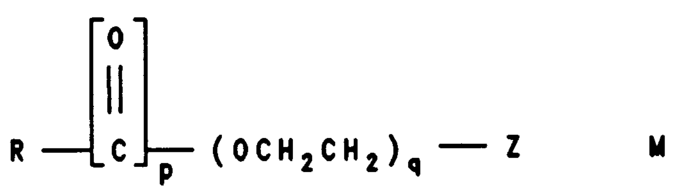

worin

R gleich $C_8$-$C_{22}$-Alkyl, bevorzugt $C_{11}$-$C_{18}$-Alkyl oder $C_8$-$C_{22}$-Alkenyl, bevorzugt $C_{11}$-$C_{22}$-Alkenyl oder $C_8$-$C_{22}$-Alkaryl,
Z eine Gruppe der Formel $OSO_3^{\ominus}$, $SO_3^{\ominus}$ oder $OCO_2^{\ominus}$,

M ein Alkalimetallion oder Triethanolammoniumion,
p entweder 0 oder 1 und
q eine Zahl von 1 bis 5, bevorzugt 2 bis 3 bedeuten;

beispielhaft für derartige Tenside seien die Komponenten II 7, II 11 und II 13 aus Gruppe $b_1$ genannt, welche nachstehend auf Seite 15 aufgeführt sind; oder
$b_2$) einem Olefinsulfonat Na-Salz, einem primären oder sekundären Alkansulfonat oder einem primären oder sekundären Alkyl-Arylsulfonat;
beispielhaft für Tenside der Gruppe $b_2$ seien die Komponenten II 11 und II 14 genannt, die nachstehend auf Seite 15 aufgeführt sind;
oder
$b_3$) einem Taurid und/oder Methyltaurid der Formel

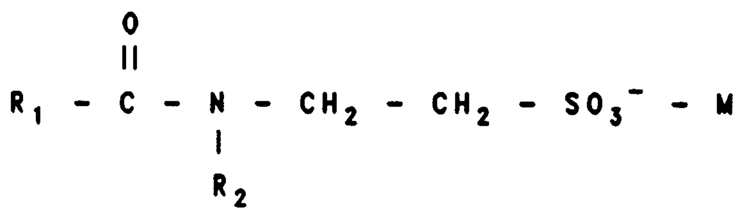

worin

$R_1$ gleich $C_8$-$C_{18}$-Alkyl, bevorzugt $C_{11}$-$C_{18}$-Alkyl, $C_8$-$C_{18}$-Alkenyl, bevorzugt $C_{11}$-$C_{18}$-Alkenyl,
$R_2$ gleich Wasserstoff oder Methyl und
M ein Alkalimetallion oder Triethanolammoniumion bedeuten.

Beispielhaft für Tenside der Gruppe $b_3$ sei die Komponente II 6 genannt, welche nachstehend auf Seite 15 aufgeführt ist.
Die kationischen Tenside (Komponente c) besitzen die Formel

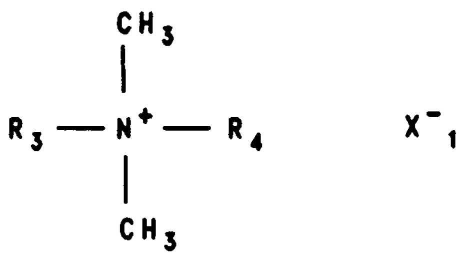

worin

| | |
|---|---|
| $R_3$ | gleich $C_8$-$C_{20}$-Alkyl |
| $R_4$ | gleich Wasserstoff, Methyl, Benzyl oder $C_8$-$C_{20}$-Alkyl |
| $X_1^-$ = | Halogenion, Acetation, Lactation oder Methylsulfation bedeuten. |

Beispielhaft für derartige Tenside seien die Komponenten II 8 und II 9 aus Gruppe c genannt, welche nachstehend auf Seite 15 aufgeführt sind.

Weiterhin eignen sich als Komponente II Naphthalinsulfonsäure-Kondensate (Komponente d). Hierbei handelt es sich im allgemeinen um wasserlösliche Polykondensationsprodukte aus Naphthalinsulfonsäure mit Formaldehyd in Form ihrer Alkali-, Erdalkali- und Ammoniumsalze.
Die Kenndaten dieser wasserlöslichen Kondensationsprodukte sind in der nachfolgenden Tabelle aufgeführt.

| Eigenschaften | typische Daten |
|---|---|
| Lieferform | flüssig/pulverförmig |
| Wirksubstanz (%) | 20-40 / 70-96 |
| Na-Sulfatgeh. (%) | 0 - 25 |
| molare Masse | 4 000 - 40 000 |
| pH-Wert | 6.5 - 11 |
| Viskosität (23°C) der flüssigen Produkte | 10 - 150 mPa • s |

Die erfindungsgemäßen Verdickerkombinationen enthalten mindestens einen nichtionischen Celluloseether (Komponente I) und eine oder mehrere Verbindungen ausgewählt aus den Komponenten IIa, $IIb_1$, $IIb_2$, $IIb_3$, IIc oder IId.

Bevorzugte Verdickerkombinationen enthalten Mischungen von Ethylhydroxyethylcelluloseethern und/oder Hydroxyethylcelluloseethern (Komponente I) mit nichtionischen Tensiden (Komponente IIa) oder anionischen Tensiden (Komponente IIb). Beispiele hierfür finden sich in den Tabelle auf den Seiten 16 und 17.

Der Anteil der Komponente II in den erfindungsgemäßen Verdickerkombinationen beträgt von 0,01 bis 99,9 Gew.-%, bevorzugt von 0,05 bis 80 Gew.-%, besonders bevorzugt von 0,05 bis 60 Gew.- %, bezogen auf das Gesamtgewicht der Komponenten I und II. Diese Angaben beziehen sich auf den Wirkstoffgehalt der jeweiligen Verbindung der Komponente II.

Die zum Teil pulverförmigen bzw. granulatförmigen Verbindungen der Komponente II werden mit den pulverförmigen Celluloseethern der Komponente I je nach Anwendungsfall entweder physikalisch trocken gemischt oder direkt in Lösung gebracht und anschließend mit dem jeweiligen Baustoffprodukt vermischt. Sie können auch direkt in das jeweilige Baustoffprodukt eingemischt werden, wobei die Komponenten I und II entweder einzeln zugemischt werden oder man mischt zunächst die Komponenten I und II miteinander und gibt diese Mischung dann den Baustoffprodukten zu. Das Einarbeiten dieser Komponenten I und II in die Baustoffprodukte erfolgt durch übliche Rühr- und Mischprozesse.

Die Summe der Wirkstoffe der Komponenten I und II der Verdickerkombination in den Baustoffprodukten beträgt 0,01 bis 5 Gew.-%, vorzugsweise 0,02 bis 1 Gew.-%, bezogen auf die Trockenmasse der Baustoffprodukte.

Unter dem Begriff "Baustoffprodukte" werden im folgenden Spachtelmassen, z.B. Gipsspachtelmassen, Klebemittel, z.B. Zementfliesenkleber, Kunststoffputze, Fugenmassen, Maschinenputze, z.B. Gips-Kalk-Maschinenputz und andere Produkte dieser Art verstanden. Bevorzugte Verwendung finden die erfindungsgemäßen Verdickerkombinationen in Baustoffprodukten auf der Basis von Gips, Gips-Kalk, Kalk-Zement oder Zement. Eine weitere Gruppe bevorzugter Baustoffprodukte sind die Dispersionsfarben. Zur Erhöhung der Viskosität können diese Baustoffprodukte eine Mischung aus den obengenannten Verdickerkombinationen mit Methylhydroxyalkyl-, Na-Carboxymethyl-, Hydroxyethyl-, Na-Carboxymethylhydroxyethyl- und/oder Ethylhydroxyethylcelluloseethern enthalten.

Die erfindungsgemäßen Verdickerkombinationen zeigen in wäßrigem Medium eine starke Verdickung, die im Rotationsviskosimeter bei der dissipierten Energie (Scherbeanspruchung) von $10^2$ und $10^4$ Pa/s bei 20°C ermittelt wurde. Danach ist in Abhängigkeit von der jeweiligen Zusammensetzung der Verdickerkombination ein ausgeprägtes strukturviskoses Verhalten zu beobachten, das sich ebenfalls auf die flüssig pastösen Baustoffprodukte überträgt.

Die Verbesserungen der Struktureigenschaften in Baustoffprodukten werden halbquantitativ bei der Anwendung bewertet. Sie liegen in der gesteigerten Verdickungswirkung, verbesserter Verarbeitbarkeit durch Nutzung der hydrophilen Basiseigenschaften der erfindungsgemäß eingesetzten Celluloseether. Die Klebeneigung am Arbeitsgerät, die oftmals bei Einsatz hochmolekularer Celluloseether beobachtet wird, wird reduziert. Weitere Vorteile sind in der besseren und leichteren Verteilbarkeit der Baustoffmasse zu sehen. Bei den Versuchen wurde eine gute Knotenauflösung bei Kurzzeit-Mischprozessen festgestellt. Die hohe "low-shear"-Verdickung korreliert mit hoher Wasserretention - auch bei erhöhten Verarbeitungstemperaturen.

Schließlich erweisen sich die Verdickerkombinationen aus Celluloseethern der Komponente I und Verbindungen der Komponente II als vorteilhaft in Dispersionsfarben, da hohe Verdickungsleistung, reduziertes Absetzen der Füllstoffe durch hohe "low shear"-Viskositäten und damit Reduzierung der Synärese-Erscheinungen/erhöhte Lagerstabilität erfolgen. Ferner resultiert eine geminderte Spritzneigung, d.h. die Verdickerkombination bewirkt günstigere Anwendungseigenschaften als z.B. ein HEC-Verdicker allein.

Sie bestehen u.a. darin, daß synergistische Verdickungen im wäßrigen Medium z.B. im "low-shear"-Bereich erhalten werden und dennoch die hauptsächlich vom Molekulargewicht des betreffenden Celluloseethers der Komponente I herrührenden viskoelastischen Eigenschaften positiv im "high shear"-Bereich, d.h. z.B. der Verarbeitungsphase einer

Dispersionsfarbe oder einer Spachtelmasse, genutzt werden können. Zusätzliche Effekte, herrührend von der organischen Tensidkomponente, sind dabei mit eingeschlossen.

Beispiele:

| Als wasserlösliche, nichtionische Celluloseether (Komponente I) werden folgende Produkte eingesetzt: | | | | |
|---|---|---|---|---|
| Probenbezeichnung | Celluloseether | Viskosität (mPa • s) der 1%igen wäßrigen Lösung bei 20°C und 100 Pa/s | durchschnittl. Substitutionsgrad/DS($OCH_3$) | molarer Substitutionsgrad/MS(EO) |
| A | "MHEC $10^4$"* | 410 | 1,5 | 0,11 |
| B | "HEC $10^4$"* | 340 | -- | 2,3 |
| | | | Hydrophobierung | |
| C | Makrotensid C**) HEC | 370 | hydrophob modifiziert durch Alkylgruppen gemäß DE-A-3 004 161 | |
| D | Makrotensid D***) EHEC | 380 | hydrophob modifiziert gemäß EP-A-0 390 240 | |
| E | Makrotensid E****) HEC | 1240 | hydrophob modifiziert durch Alkylarylglycidylether gemäß EP-A- 0 384 167 | |

Die Proben A und B sind Vergleichsproben.
* Anmerkung: Die Kernzahl $10^4$ bedeutet, daß die 2 %ige wäßrige Lösung des betreffenden Celluloseethers 10.000 [mPa • s] Viskosität besitzt - gemessen mit dem Höppler-Kugelfallviskosimeter.
Die Proben C,D und E sind erfindungsgemäß verwendete Celluloseether.
**) ®Natrosol Plus C (Aqualon Company)
***) ®Bermocoll EH M 100 (Berol Nobel Stenungsund AB)
****) ®Cellosize Spatterguard 100 (Union Carbide Chemicals and Plastics Company, Inc.)

| Kenndaten der eingesetzten Komponenten II (siehe auch Beispiele) | | |
|---|---|---|
| Komponente II | Gruppe | Bezeichnung |
| 1 | a | i-$C_{13}$-Alkohol + 3 Mol EO |
| 2 | a | i-$C_{13}$-Alkohol + 6 Mol EO |
| 3 | a | Nonylphenol + 6 Mol EO |
| 4 | a | Tributylphenol + 6 Mol EO |
| 5 | a | $C_{14/15}$-Oxoalkohol + 4 Mol EO |
| 6 | $b_3$ | Oleylmethyltaurid |
| 7 | $b_1$ | Alkylethercarboxylat |
| 8 | c | $(C_{10}H_{22})_2(CH_3)_2NCl$ |
| 9 | c | $(C_{18}H_{37})_2(CH_3)_2NCl$ |

(fortgesetzt)

| Kenndaten der eingesetzten Komponenten II (siehe auch Beispiele) | | |
|---|---|---|
| Komponente II | Gruppe | Bezeichnung |
| 10 | a | $C_{11}$-Oxoalkohol + 3 Mol EO |
| 11 | $b_2$ | sekundäres Alkansulfonat Na-Salz |
| 12 | $b_1$ | $C_{12}/C_{14}$ Alkyldiglykolethersulfat Na-Salz |
| 13 | $b_1$ | $C_{12}/C_{14}$ Alkyltriglykolethersulfat Na-Salz |
| 14 | $b_2$ | $C_{14}/C_{16}$-$\alpha$-Olefinsulfonat Na-Salz |
| 15 | d | Naphthalinsulfonsäure-Formaldehyd-Kondensat |
| 16 | d | Naphthalinsulfonsäure-Formaldehyd-Kondensat |

| Beispiele für Verdickerkombinationen | | | |
|---|---|---|---|
| Beispiel | Komponente I | Komponente II | Viskosität (mPa • s) |
| 1 | Probe C | - | 370 |
| 2 | " | 1 | 1 110 |
| 3 | " | 2 | 745 |
| 4 | " | 3 | 650 |
| 5 | " | 4 | 625 |
| 6 | " | 5 | 1 840 |
| 7 | " | 6 | 1 430 |
| 8 | " | 7 | 580 |
| 9 | " | 8 | 680 |
| 10 | " | 9 | 790 |
| 11 | " | 10 | 1 150 |
| 12 | " | 11 | 1 300 |
| 13 | " | 12 | 3 000 |
| 14 | " | 13 | 1 740 |
| 15 | " | 14 | 2 100 |
| 16 | " | 15 | 1 870 |
| 17 | " | 16 | > 10 000 |
| 18 | Probe D | - | 410 |
| 19 | " | 1 | 540 |
| 20 | " | 6 | 870 |
| 21 | " | 12 | 3 980 |
| 22 | " | 13 | 840 |
| 23 | " | 14 | 540 |
| 24 | " | 15 | 890 |

(fortgesetzt)

| Beispiele für Verdickerkombinationen | | | |
|---|---|---|---|
| Beispiel | Komponente I | Komponente II | Viskosität (mPa • s) |
| 25 | " | 16 | 1 550 |
| 26 | Probe E | - | 1 230 |
| 27 | " | 1 | 1 360 |
| 28 | " | 3 | 1 260 |
| 29 | " | 5 | 1 990 |
| 30 | " | 9 | 1 550 |

Die Viskosität wird bei $10^2$ Pa/s, 20°C in 1 gew.-%iger wäßriger Lösung gemessen. Das Gewichtsverhältnis Komponente I:Komponente II beträgt 10:1.

Die Herstellung der Dispersionsfarben erfolgt gemäß den nachfolgenden Rezepturen 1 und 2. Um den Wirkungseffekt bzgl. der Spritzneigung zu verfolgen, wurden hier mit Absicht geringere Mengen an Verdickerkombination eingesetzt. Das Spritz- und Kleckerverhalten wurde mit einer mechanisierten Laborprüfmaschine untersucht, bei der die mit einer definierten Farbenmenge beladene Farbenrolle waagrecht über ein Farbenabstreifgitter definiert bzgl. Geschwindigkeit und Anpreßdruck geführt und die Farbenspritzer auf einem weiter unten liegenden schwarzen Karton aufgefangen werden. Spritzteilchenanzahl und -größe werden halbquantitativ beurteilt.

| Rezeptur 1 Dispersionsfarben (Angaben in Gew.-Teilen) | | | | |
|---|---|---|---|---|
| Beispiel | 1 | 2 | 3 | 4 |
| Wasser | 170,5 | 170,5 | 170,5 | 170,5 |
| Konserv.-Mittel | 1 | 1 | 1 | 1 |
| Dispergiermittel | 10 | 10 | 10 | 10 |
| Probe C | 1,7 | 1,7 | 1,7 | 1,7 |
| Komp. II | -0,17 Gew.-T. | 16 0,17 Gew.-T. | 15 0,17 Gew.-T. | 6 0,17 Gew.-T. |
| $TiO_2$ | 37,5 | 37,5 | 37,5 | 37,5 |
| Füllstoffe | 237,5 | 237,5 | 237,5 | 237,5 |
| NaOH/10%ig | 0,5 | 0,5 | 0,5 | 0,5 |
| Styrolacrylat-Dispersion***) | 45 | 45 | 45 | 45 |
| Filmbildner | 2 | 2 | 2 | 2 |
| Viskosität (mPa • s)*) | 4 500 (1 100) | 3 000 (1 100) | 3 500 (900) | 3 000 (800) |
| Auswertung**) | 7 | 5 | 5 | 6 |

*) Brookfield-Viskosimeter, Spindel 6 bei 10 und 100 UpM (Angabe in Klammern)
**) relative Einstufung: kein ("1") ... ("10") starkes Spritzen/Kleckern
***) Mowilith DM 611 (Hoechst AG)

| Rezeptur 2 Dispersionsfarben (Angaben in Gewichtsteilen) | | | | | |
|---|---|---|---|---|---|
| Beispiel | 5 | 6 | 7 | 8 | 9 |
| Wasser | 170,5 | 170,5 | 170,5 | 170,5 | 170,5 |
| Konserv.-Mittel | 1 | 1 | 1 | 1 | 1 |
| Dispergiermittel | 10 | 10 | 10 | 10 | 10 |
| Probe C | 1,7 | 1,7 | 1,7 | 1,7 | 1,7 |
| Komp. II | - | 16 0,17 Gew.-T | 15 0,17 Gew.-T | 14 0,17 Gew.-T | 6 0,17 Gew.-T |
| $TiO_2$ | 37,5 | 37,5 | 37,5 | 37,5 | 37,5 |
| Füllstoffe | 237,5 | 237,5 | 237,5 | 237,5 | 237,5 |
| NaOH/10%ig | 0,5 | 0,5 | 0,5 | 0,5 | 0,5 |
| Ethylen-Vinylacetat-Copolymer***) | 45 | 45 | 45 | 45 | 45 |
| Viskosität (mPa • s)*) | 2 000 (600) | 2 500 (850) | 3 000 (950) | 3 000 (850) | 2 500 (700) |
| Auswertung**) | 3 | 2 | 2 | 3 | 2 |

*) Brookfield-Viskosimeter, Spindel 6 bei 10 und 100 UpM (Angabe in Klammern) Dispersionsfarbe 1 Tag konditioniert bei 23°C
**) relative Einstufung: kein ("1") ... ("10") starkes Spritzen/Kleckern
***) Mowilith DM 1290 (Hoechst AG)

Beispiele für synergistische Wirkungsweise der Verdickerkombination im Baustoffprodukt Gipsspachtelmasse

| Rezeptur 3: Verdickerkombination in Gipsspachtelmassen (Angaben in Gew.-Teilen) | | | | | |
|---|---|---|---|---|---|
| Beispiel | 10 | 11 | 12 | 13 | 14 |
| Modellgips*) | 200,0 | 200,0 | 200,0 | 200,0 | 200,0 |
| Verzögerer**) | 0,2 | 0,2 | 0,2 | 0,2 | 0,2 |
| Probe C | 1,0 | 0,9 | 0,9 | 0,9 | 0,9 |
| Komp. II Zusatz als | -0,1 Gew.-T. | 6 0,1 Gew.-T. | 14 0,1 Gew.-T. | 15 0,1 Gew.-T. | 16 0,1 Gew.-T. |
| Wasser | 94 | 94 | 94 | 94 | 94 |
| Beurteilung | | | | | |
| Andickung | ganz schwach ohne Verdikkungsberg | sehr stark ausgeprägt | schwach, ähnl. wie Vers. Nr. 10 | schwach, ähnl. Vers. Nr. 10 | schwach, ähnl. wie Vers.Nr. 10 |
| Klumpenbildg.+) | wenig | keine | keine | keine | keine |
| Struktur++) | 2 | 1+ | 3 | 4 | 4 |

*) β-Halbhydratgips, feingemahlen
**) Zeliquid GA (Hoechst AG)
+) Mischzeit 1 Minute, manuell
++) Schulnotensystem: 1 = sehr gut, 6 = ungenügend

Der nach Beispiel 11 hergestellte Gipsspachtel zeigt eine starke (gewünschte) Verdickung, rasche Klumpenauflösung innerhalb kurzer Mischzeiten und sehr gute Strukturkonsistenz/Geschmeidigkeit.

Beispiele für synergistische Wirkungsweise der Verdickerkombination im Baustoffprodukt Gips-Kalk-Maschinenputz

| Rezeptur 4: Verdickerkombination in Gips-Kalk-Maschinenputz (Angaben in Gew.-Teilen) | | | | | | |
|---|---|---|---|---|---|---|
| Beispiel | 15 | 16 | 17 | 18 | 19 | 20 |
| G-K-MP-Grundmischung*) | 200 | 200 | 200 | 200 | 200 | 200 |
| Probe C | 0,4 | 0,36 | 0,36 | 0,36 | 0,36 | 0,36 |
| Komp. II, Zusatz als | - | 6 0,04 Gew.-T. | 14 0,04 Gew.-T. | 15 0,04 Gew.-T. | 16 0,04 Gew.-T. | 1 0,04 Gew.-T. |
| Wasser | 72 | 72 | 72 | 72 | 72 | 72 |
| Beurteilung | | | | | | |
| Andickung | schwach in ca. 8 Sek. | schwach in 8-10 Sek. | schwach in 8-10 Sek. | stark 8 Sek. | stark 8-10 Sek. | mittel 8-10 Sek. |
| Klumpenbildung+) | einige | einige | einige | wenige | wenige | wenige |
| Struktur++) | 3 | 1 | 2 | 1 | 2 | 2- |

*) ca. 40 Gew.-Teile Gips
7 Gew.-Teile Kalkhydrat
Rest: Kalksandstein
+) Rührzeit nur 20 Sekunden, manuell
++) Schulnotensystem: 1 = sehr gut; 6 = ungenügend

Die Gips-Kalk-Maschinenputze der Beispiele 16 und 18 schneiden bzgl. Struktur günstig ab. Die Beispiele 18 und 19 zeigen starke Andickungen bei kurzer Rührzeit.

Beispiele für synergistische Wirkungsweise der Verdickerkombination im Baustoffprodukt (Zementfliesenkleber)

| Rezeptur 5: Verdickerkombination im Zementfliesenkleber (Angaben in Gew.-Teilen) | | | | | |
|---|---|---|---|---|---|
| Beispiel | 21 | 22 | 23 | 24 | 25 |
| Fliesenkleber-Grundgemisch*) | 300 | 300 | 300 | 300 | 300 |
| Probe C | 1,5 | 1,35 | 1,35 | 1,35 | 1,35 |
| Komp. II Zusatz | - | 6 0,15 Gew.-Teile | 14 0,15 Gew.-Teile | 15 0,15 Gew.-Teile | 16 0,15 Gew.-Teile |
| Wasser | 66 | 66 | 66 | 66 | 66 |
| Beurteilung | | | | | |
| Andickung | | etwas stärker als Vers. Nr. 21 | etwa wie Vers. Nr. 21 | sehr starke Andikkung | sehr starke Andikkung |
| Struktur++) | 4 | 4 | 3 | 1 | 1 |

*) 40 Gew.-Teile Zement PZ 45 F 60 Gew.-Teile Sand diverser Körnung
++) Schulnotensystem: 1 = sehr gut, 6 = ungenügend

Die Verdickerkombinationen gemäß den Beispielen 24 und 25 verdicken sehr stark.

Beispiele für synergistische Wirkungsweise der Verdickerkombination im Baustoffprodukt (Gips-Kalk-Maschinenputz)

| Beurteilung der temperaturabhängigen Wasserretention in Gips-Kalk-Maschinenputz nach DIN 18 555 bei 20°C und 40°C (Angaben in Gew.-Teilen) | | | | |
|---|---|---|---|---|
| Beispiele | 26 | 27 | 28 | 29 |
| Gips-Kalk-Grundgemisch | 1000 | 1000 | 1000 | 1000 |
| Probe C | 2 | 2 | 2 | 2 |
| Komp. II (Nr. 6) | - | 0,2 | - | 0,2 |
| Wasser | 360 | 260 | 260 | 360 |
| Beurteilung | | | | |
| Wasserretention | bei 20°C | bei 20°C | bei 40°C | bei 40°C |
| in (%) | 97,95 | 98,30 | 97,31 | 97,64 |

Mit dem Celluloseether sowie der Verdickerkombination - mit reduziertem Anteil an Celluloseether - werden aufgrund des niedrigen Wasserfaktors und der günstigen Struktur hohe Wasserretentionen erzielt. Sie sind im untersuchten Temperaturbereich vergleichbar, d.h. unabhängig von der Verarbeitungstemperatur.

**Patentansprüche**

1. Verdickerkombination für Baustoffprodukte, enthaltend mindestens einen in Wasser bzw. wäßrigen Tensidlösungen löslichen, nicht-ionischen Celluloseether (Komponente I), der mit mindestens einem Kohlenwasserstoffrest mit 8 bis 36 Kohlenstoffatomen substituiert ist, und als Komponente II
0,05 bis 10 Gew.-%, bezogen auf das Gesamtgewicht der Komponenten I und II,

a) mindestens ein nichtionisches Tensid der Formel

$$R - A_n - OH$$

worin

R gleich $C_8$-$C_{22}$-Alkyl, $C_8$-$C_{22}$-Alkenyl oder $C_8$-$C_{12}$-Alkaryl,
A die Gruppe $OCH_2CH_2$ oder $OCH(CH_3)CH_2$ und
n eine Zahl von 1 bis 8

oder
b) mindestens ein anionisches Tensid bestehend aus
b1) mindestens einem Ethersulfat, Ethersulfonat, Ethercarboxylat und/oder Isethionat der Formel

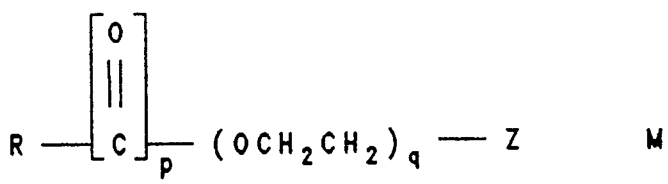

worin

R gleich $C_8$-$C_{22}$-Alkyl oder $C_8$-$C_{22}$-Alkenyl oder $C_8$-$C_{12}$-Alkaryl,

Z eine Gruppe der Formel $OSO_3^{\ominus}$, $SO_3^{\ominus}$ oder $OCO_2^{\ominus}$,
M ein Alkalimetallion oder Triethanolammoniumion,
p entweder 0 oder 1 und
q eine Zahl von 1 bis 5 bedeuten

oder
b2) mindestens einem Olefinsulfonat-Na-Salz, einem primären oder sekundären Alkansulfonat oder einem primären oder sekundären Alkyl-Arylsulfonat
oder
b3) mindestens einem Taurid und/oder Methyltaurid der Formel

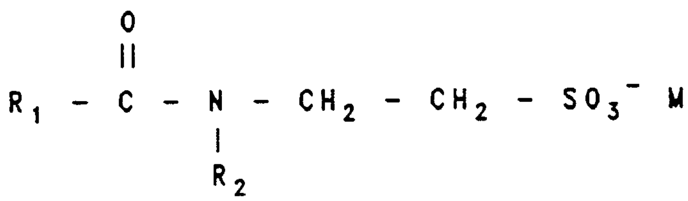

worin

$R^1$ gleich $C_8$-$C_{18}$-Alkyl oder $C_8$-$C_{18}$-Alkenyl,
$R^2$ gleich Wasserstoff oder Methyl und
M ein Alkalimetallkation oder Triethanolammoniumion bedeuten

oder
c) mindestens ein kationisches Tensid der Formel

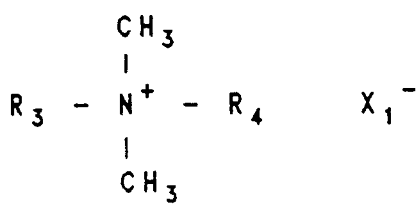

worin

$R^3$ gleich $C_8$-$C_{20}$-Alkyl,
$R^4$ gleich Wasserstoff, Methyl, Benzyl oder $C_8$-$C_{20}$-Alkyl und
$X_1^{\ominus}$ ein Halogenion, Acetation, Lactation oder Methylsulfation bedeuten

oder
d) mindestens ein Naphthalinsulfonsäure-Formaldehyd-Kondensat.

**2.** Verdickerkombination nach Anspruch 1, dadurch gekennzeichnet, daß in dem nichtionischen Tensid der Formel

$$R - A_n - OH$$

R $C_{11}$-$C_{18}$-Alkyl, $C_{11}$-$C_{22}$-Alkenyl bedeutet und
n eine Zahl von 2 bis 5 darstellt,

in dem Ethersulfat, Ethersulfonat, Ethercarboxylat und/oder Isethionat der Formel

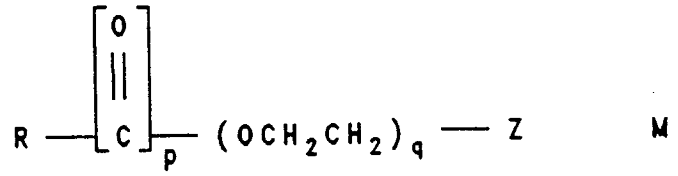

R $C_{11}$-$C_{18}$-Alkyl oder $C_{11}$-$C_{22}$-Alkenyl bedeutet und
q eine Zahl von 2 bis 3 darstellt,

in dem Taurid und/oder Methyltaurid der Formel

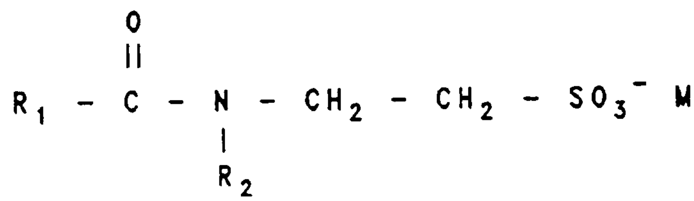

$R^1$ $C_{11}$-$C_{18}$-Alkyl oder $C_{11}$-$C_{18}$-Alkenyl bedeutet.

**3.** Verdickerkombination nach Anspruch 1 oder 2, dadurch gekennzeichnet, daß als Celluloseether (Komponente I) nichtionische, mindestens zu 1 Gew.-%, in Wasser bei 20°C, lösliche Celluloseether eingesetzt werden.

**4.** Verdickerkombinationen nach einem der Ansprüche 1 bis 3, dadurch gekennzeichnet, daß der Celluloseether eine Methyl-, Hydroxyethyl-, Hydroxypropyl- oder Ethylhydroxyethylsubstitution, bevorzugt eine Hydroxyethyl- oder Ethylhydroxyethylsubstitution (= Celluloseethersubstrat) und eine weitere Substitution durch mindestens einen Kohlenwasserstoffrest mit 10 bis 24 Kohlenstoffatomen, in einer Menge zwischen 0,2 Gew.-% und 5 Gew.-%, bezogen auf das Celluloseethersubstrat, besitzt.

**5.** Verdickerkombination nach einem der Ansprüche 1 bis 4, dadurch gekennzeichnet, daß die weiteren Substituenten des Celluloseethersubstrats sich von $C_8$-$C_{36}$-Alkylhalogeniden, $C_8$-$C_{36}$-Alkylarylhalogeniden, $C_8$-$c_{36}$-Alkylepoxiden, $C_8$-$C_{36}$-Alkylarylglycidylether oder $C_8$-$C_{36}$-Alkylglycidylether ableiten.

**6.** Verdickerkombinationen nach einem der Ansprüche 1 bis 5, dadurch gekennzeichnet, daß als Celluloseether Hydroxyethylcelluloseether mit einem molaren Substitutionsgrad MS(EO) von 1,5 bis 3,3 und einem durchschnittlichen Substitutionsgrad DS(EO) von 0,8 bis 2,2 eingesetzt werden.

**7.** Verdickerkombinationen nach einem der Ansprüche 1 bis 5, dadurch gekennzeichnet, daß als Celluloseether Ethylhydroxyethylcelluloseether mit einem molaren Substitutionsgrad DS(Ethyl) von 0,5 bis 1,5, einem molaren Substitutionsgrad MS(EO) von 0,5 bis 2,8 und einem durchschnittlichen Substitutionsgrad DS(EO) von 0,5 bis 2,0 eingesetzt werden.

**8.** Verdickerkombinationen nach einem der Ansprüche 1 bis 7, dadurch gekennzeichnet, daß die Celluloseether (Komponente I) ein mittleres Molekulargewicht ($\overline{M}_w$) von 10 000 bis 500 000 besitzen.

**9.** Verdickerkombinationen nach einem der Ansprüche 1 bis 8, dadurch gekennzeichnet, daß sie Mischungen von Hydroxyethylcelluloseethern und/oder Ethylhydroxyethylcelluloseethern (Komponente I) mit nichtionischen Tensiden (Komponente IIa) oder anionischen Tensiden (Komponente IIb) enthalten.

**10.** Baustoffprodukte enthaltend eine Verdickerkombination nach einem der Ansprüche 1 bis 9.

**11.** Baustoffprodukte nach Anspruch 10, enthaltend 0,01 bis 2, bevorzugt 0,02 bis 1 Gew.-%, bezogen auf die Trockenmasse des Baustoffproduktes, der Verdickerkombination.

**12.** Verwendung der Verdickerkombinationen nach einem der Ansprüche 1 bis 9 in Baustoffprodukten, insbesondere Baustoffprodukten auf Basis Gips, Gips-Kalk, Kalk-Zement oder Zement und Farben, bevorzugt Dispersionsfarben.

## Claims

**1.** A thickener combination for building products, comprising at least one nonionic cellulose ether soluble in water or aqueous surfactant solutions (component I), which is substituted by at least one hydrocarbon radical having from 8 to 36 carbon atoms, and, as component II,
from 0.05 to 10% by weight, based on the total weight of the components I and II, of

a) at least one nonionic surfactant of the formula

$$R - A_n - OH$$

in which

R is $C_8$-$C_{22}$-alkyl, $C_8$-$C_{22}$-alkenyl or $C_8$-$C_{12}$-alkaryl,
A is the group $OCH_2CH_2$ or $OCH(CH_3)CH_2$, and
n is a number from 1 to 8

or
b) at least one anionic surfactant comprising
b1) at least one ethersulfate, ethersulfonate, ethercarboxylate and/or isethionate of the formula

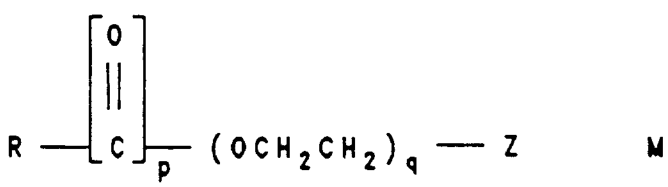

in which

R is $C_8$-$C_{22}$-alkyl or $C_8$-$C_{22}$-alkenyl or $C_8$-$C_{12}$-alkaryl,
Z is a group of the formula $OSO_3^{\ominus}$, $SO_3^{\ominus}$ or $OCO_2^{\ominus}$,
M is an alkali metal ion or triethanolammonium ion,
p is either 0 or 1, and
q is a number from 1 to 5

or
b2) at least one olefinsulfonate sodium salt, a primary or secondary alkanesulfonate or a primary or secondary alkylarylsulfonate
or
b3) at least one tauride and/or methyltauride of the formula

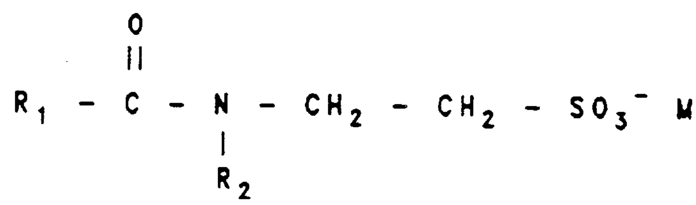

in which

$R_1$ is $C_8$-$C_{18}$-alkyl or $C_8$-$C_{18}$-alkenyl,
$R_2$ is hydrogen or methyl, and
M is an alkali metal cation or triethanolammonium ion

or
c) at least one cationic surfactant of the formula

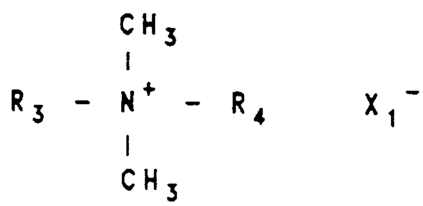

in which

$R_3$ is $C_8$-$C_{20}$-alkyl,
$R_4$ is hydrogen, methyl, benzyl or $C_8$-$C_{20}$-alkyl, and
$X_1^-$ is a halide ion, acetate ion, lactate ion or methylsulfate ion

or
d) at least one naphthalenesulfonic acid/formaldehyde condensation product.

**2.** A thickener combination as claimed in claim 1, wherein in the nonionic surfactant of the formula

$$R - A_n - OH$$

R is $C_{11}$-$C_{18}$-alkyl, $C_{11}$-$C_{22}$-alkenyl and
n is a number from 2 to 5,

in the ethersulfate, ethersulfonate, ethercarboxylate and/or isethionate of the formula

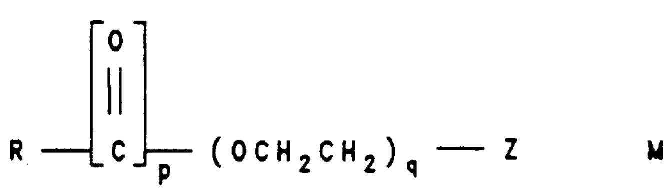

R is $C_{11}$-$C_{18}$-alkyl or $C_{11}$-$C_{22}$-alkenyl and
q is a number from 2 to 3,

in the tauride and/or methyltauride of the formula

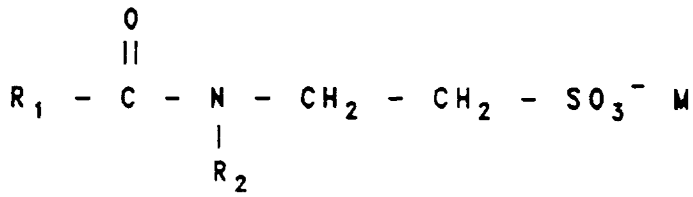

$R_1$ is $C_{11}$-$C_{18}$-alkyl or $C_{11}$-$C_{18}$-alkenyl.

**3.** A thickener combination as claimed in claim 1 or 2, wherein the cellulose ethers (component I) used are nonionic cellulose ethers soluble to at least 1% by weight in water at 20°C.

**4.** A thickener combination as claimed in any one of claims 1 to 3, wherein the cellulose ether possesses a methyl, hydroxyethyl, hydroxypropyl or ethylhydroxyethyl substitution, preferably a hydroxyethyl or ethylhydroxyethyl substitution (= cellulose ether substrate) and a further substitution by at least one hydrocarbon radical having from 10 to 24 carbon atoms in an amount between 0.2% by weight and 5% by weight, based on the cellulose ether substrate.

**5.** A thickener combination as claimed in any one of claims 1 to 4, wherein the further substituents of the cellulose ether substrate are derived from $C_8$-$C_{36}$-alkyl halides, $C_8$-$C_{36}$-alkylaryl halides, $C_8$-$C_{36}$-alkyl epoxides, $C_8$-$C_{36}$-alkylaryl glycidyl ethers or $C_8$-$C_{36}$-alkyl glycidyl ethers.

**6.** A thickener combination as claimed in any one of claims 1 to 5, wherein the cellulose ethers used are hydroxyethylcellulose ethers having a molar degree of substitution MS(EO) of from 1.5 to 3.3 and an average degree of substitution AS(EO) of from 0.8 to 2.2.

**7.** A thickener combination as claimed in any one of claims 1 to 5, wherein the cellulose ethers used are ethylhydroxyethylcellulose ethers having a molar degree of substitution AS(ethyl) of from 0.5 to 1.5, a molar degree of substitution MS(EO) of from 0.5 to 2.8 and an average degree of substitution AS(EO) of from 0.5 to 2.0.

**8.** A thickener combination as claimed in any one of claims 1 to 7, wherein the cellulose ethers (component I) possess an average molecular weight ($\overline{M}_w$) of from 10,000 to 500,000.

**9.** A thickener combination as claimed in any one of claims 1 to 8, which comprises a mixture of hydroxyethylcellulose ethers and/or ethylhydroxyethylcellulose ethers (component I) with nonionic surfactants (component IIa) or anionic surfactants (component IIb).

**10.** A building product comprising a thickener combination as claimed in any one of claims 1 to 9.

**11.** A building product as claimed in claim 10, comprising from 0.01 to 2, preferably from 0.02 to 1, % by weight, based on the dry mass of the building product, of the thickener combination.

**12.** Use of a thickener combination as claimed in any one of claims 1 to 9 in building products, in particular building products based on plaster, plaster/lime, lime/cement or cement, and paints, preferably dispersion paints.

## Revendications

**1.** Combinaison d'agents épaississants pour des produits de construction, contenant au moins un éther de cellulose non ionique, soluble dans l'eau ou dans des solutions aqueuses d'agents tensioactifs (composant I), qui est substitué avec au moins un groupe hydrocarboné ayant 8 à 36 atomes de carbone, et comme composant II 0,05 à 10% en poids, par rapport au poids global des composants I et II,

a) d'au moins un agent tensioactif non ionique de formule

$$R - A_n - OH$$

dans laquelle

R représente un groupe alkyle en $C_8$-$C_{22}$, alcényle en $C_8$-$C_{22}$ ou alcaryle en $C_8$-$C_{12}$,
A représente le groupe $OCH_2CH_2$ ou $OCH(CH_3)CH_2$ et
n représente un nombre de 1 à 8

ou
b) d'au moins un agent tensioactif anionique, constitué :
$b_1$) d'au moins un éthersulfate, éthersulfonate, éthercarboxylate et/ou iséthionate de formule

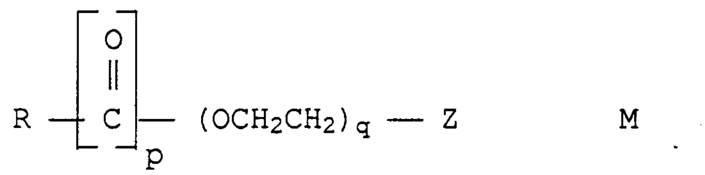

dans laquelle

R représente un groupe alkyle en $C_8$-$C_{22}$ ou alcényle en $C_8$-$C_{22}$ ou alcaryle en $C_8$-$C_{12}$,
Z représente un groupe de formule $OSO_3^-$, $SO_3^-$ ou $OCO_2^-$,
M représente un ion de métal alcalin ou un ion triéthanolammonium,
p représente soit 0 ou 1 et
q un nombre de 1 à 5

ou
$b_2$) d'au moins un sel de Na d'oléfine-sulfonate, un alcanesulfonate primaire ou secondaire ou un alkylarylsulfonate primaire ou secondaire,
ou
$b_3$) d'au moins un aminoéthylsulfonate et/ou méthylaminoéthylsulfonate de formule

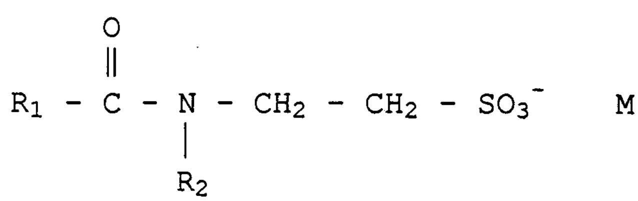

dans laquelle

$R_1$ représente un groupe alkyle en $C_8$-$C_{18}$ ou alcényle en $C_8$-$C_{18}$,
$R_2$ représente un atome d'hydrogène ou un groupe méthyle et
M un ion de métal alcalin ou un ion triéthanolammonium,

ou
c) d'au moins un agent tensioactif cationique de formule

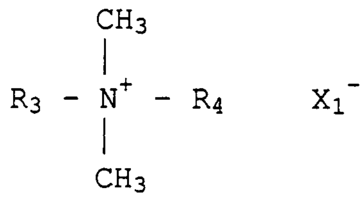

dans laquelle

$R_3$ représente un groupe alkyle en $C_8$-$C_{20}$,
$R_4$ représente un atome d'hydrogène, un groupe méthyle, benzyle ou alkyle en $C_8$-$C_{20}$ et
$X_1^-$ représente un ion halogène, acétate, lactate ou méthylsulfate

ou
d) d'au moins un produit de condensation acide naphtalènesulfonique-formaldéhyde.

**2.** Combinaison d'agents épaississants selon la revendication 1, caractérisée en ce que, dans l'agent tensioactif non ionique de formule

$$R - A_n - OH$$

R représente un groupe alkyle en $C_{11}$-$C_{18}$, alcényle en $C_{11}$-$C_{22}$ et
n représente un nombre de 2 à 5,

en ce que, dans l'éthersulfate, l'éther sulfonate, l'éthercarboxylate et/ou l'iséthionate de formule

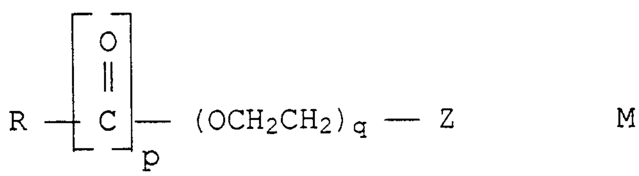

R représente un groupe alkyle en $C_{11}$-$C_{18}$ ou alcényle en $C_{11}$-$C_{22}$ et
q représente un nombre de 2 à 3,

en ce que, dans l'aminoéthylsulfonate et/ou méthylaminoéthylsulfonate de formule

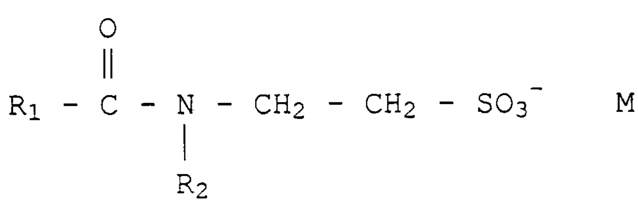

$R_1$ représente un groupe alkyle en $C_{11}$-$C_{18}$ ou alcényle en $C_{11}$-$C_{18}$.

**3.** Combinaison d'agents épaississants selon la revendication 1 ou 2, caractérisée en ce qu'on utilise comme éther de cellulose (composant I) des éthers de cellulose non ioniques, solubles, au moins jusqu'à 1% en poids dans l'eau à 20°C.

4. Combinaisons d'agents épaississants selon l'une des revendications 1 à 3, caractérisées en ce que l'éther de cellulose possède une substitution par un groupe méthyle, hydroxyéthyle, hydroxypropyle ou éthylhydroxyéthyle, de préférence une substitution par un groupe hydroxyéthyle ou éthylhydroxyéthyle (= substrat d'éther de cellulose) et une autre substitution par au moins un groupe hydrocarboné ayant 10 à 24 atomes de carbone, en une quantité entre 0,2% en poids et 5% en poids, par rapport au substrat d'éther de cellulose.

5. Combinaison d'agents épaississants selon l'une des revendications 1 à 4, caractérisée en ce les autres substituants du substrat d'éther de cellulose dérivent d'halogénures d'alkyle en $C_8$-$C_{36}$, d'halogénures d'alkylaryle en $C_8$-$C_{36}$, d'alkylépoxydes en $C_8$-$C_{36}$, d'éthers d'alkylarylglycidyle en $C_8$-$C_{36}$ ou d'éthers d'alkylglycidyle en $C_8$-$C_{36}$.

6. Combinaisons d'agents épaississants selon l'une des revendications 1 à 5, caractérisées en ce qu'on utilise comme éther de cellulose un éther d'hydroxyéthylcellulose avec un degré de substitution molaire MS(EO) de 1,5 à 3,3 et un degré de substitution moyen DS(EO) de 0,8 à 2,2.

7. Combinaisons d'agents épaississants selon l'une des revendications 1 à 5, caractérisées en ce qu'on utilise comme éther de cellulose un éther d'éthylhydroxyéthylcellulose avec un degré de substitution molaire DS(éthyle) de 0,5 à 1,5, un degré de substitution molaire MS(EO) de 0,5 à 2,8 et un degré de substitution moyen DS(EO) de 0,5 à 2,0.

8. Combinaisons d'agents épaississants selon l'une des revendications 1 à 7, caractérisées en ce que les éthers de cellulose (composant I) possèdent une masse moléculaire ($\overline{M}_{\overline{w}}$) de 10 000 à 500 000.

9. Combinaisons d'agents épaississants selon l'une des revendications 1 à 8, caractérisées en ce qu'elles contiennent des mélanges d'éthers d'hydroxyéthylcellulose et/ou d'éthers d'éthylhydroxyéthylcellulose (composant I) avec des agents tensioactifs non ioniques (composant IIa) ou des agents tensioactifs anioniques (composant IIb).

10. Produits de construction contenant une combinaison d'agents épaississants selon l'une des revendications 1 à 9.

11. Produits de construction selon la revendication 10, contenant 0,01 à 2, de préférence 0,02 à 1% en masse, par rapport à la masse sèche du produit de construction, de la combinaison d'agents épaississants.

12. Utilisation des combinaisons d'agents épaississants selon l'une des revendications 1 à 9 dans des produits de construction, en particulier des produits de construction à base de plâtre, de plâtre-chaux, de ciment à la chaux, ou de ciment et de peintures, de préférence des peintures au latex.